# EUROPEAN PATENT APPLICATION

(11) **EP 4 817 913 A1**
(43) Date of publication of application: **07.10.2026**
(21) Application number: 24896271.4
(22) Date of filing: 13.11.2024
(51) Int. Cl.: B60J 5/06, E06B 3/46

(54) **SLIDING DOOR SYSTEM FOR VEHICLE AND VEHICLE**

(30) Priority: 27.11.2023 CN 202323208067 U
(71) Applicant: Beijing Chehejia Automobile Technology Co., Ltd., Beijing 101300 (CN)
(72) Inventor: WANG, Wu, Beijing 101300 (CN); ZHOU, Jie, Beijing 101300 (CN); JIANG, Ming, Beijing 101300 (CN)
(74) Representative: 2SPL Patentanwälte PartG mbB
(86) International application number: PCT/CN2024/131730
(87) International publication number: WO 2025/113180

(57) **Abstract**

A sliding door system for a vehicle and a vehicle, the sliding door system comprising a sliding door body (1), a middle sliding assembly (12), and a lower sliding assembly (13). The sliding door body comprises a first end (A1) for mounting a vehicle window (10) and a second end (A2) away from the first end. The middle sliding assembly is mounted at the first end. The lower sliding assembly is mounted at the second end and comprises a main sliding assembly (131) and an auxiliary sliding assembly (132), the auxiliary sliding assembly being located on the side of the main sliding assembly facing away from the first end. The main sliding assembly comprises a lower main guide rail (1311) and a lower main hinge (1312), the lower main hinge being fixedly connected to the sliding door body, and the lower main guide rail being slidably fitted with the lower main hinge. The auxiliary sliding assembly comprises a lower auxiliary guide rail (1321) and a lower auxiliary hinge (1322), the lower auxiliary hinge being fixedly connected to the sliding door body, and the lower auxiliary guide rail being slidably fitted with the lower auxiliary hinge. According to the described sliding door system for a vehicle, frameless vehicle windows can be attained while stability requirements for the sliding door system for a vehicle are met.

## Description

The present application claims priority to Chinese patent application No. 202323208067.8, entitled "SLIDING DOOR SYSTEM FOR VEHICLE AND VEHICLE", filed before the China National Intellectual Property Administration (CNIPA) on November 27, 2023, the entire contents of which are incorporated herein by reference.

### TECHNICAL FIELD

This application relates to the field of vehicles, and in particular to a vehicle sliding door system and a vehicle.

### BACKGROUND

Currently, traditional mid-to-large-sized vehicles in China predominantly adopt sliding door systems with a three-rail configuration. The upper rail and upper hinge are used for limiting the degree of freedom in ±Y direction (perpendicular to the side door); the middle guide rail is used for limiting the degree of freedom in ±Y directional and auxiliary load bearing; the lower rail is responsible for the primary load bearing and limiting the degree of freedom in the +Z direction. The existing vehicle sliding door systems cannot be equipped with frameless windows.

### SUMMARY

Embodiments of the present application provide a vehicle sliding door system and a vehicle. The vehicle sliding door system provided by the present application can achieve frameless windows while meeting the stability requirements of the vehicle sliding door system.

In a first aspect, an embodiment of the present application provides a vehicle sliding door system, including:
a sliding door body, the sliding door body includes a first end for mounting a window and a second end remote from the first end;
a middle sliding assembly mounted at the first end; and
a lower sliding assembly, mounted at the second end and including a main sliding assembly and an auxiliary sliding assembly, the auxiliary sliding assembly is disposed on a side of the main sliding assembly facing away from the first end; the main sliding assembly includes a lower main guide rail and a lower main hinge, the lower main hinge is fixedly connected to the sliding door body, and the lower main guide rail is in sliding engagement with the lower main hinge; the auxiliary sliding assembly comprises a lower auxiliary guide rail and a lower auxiliary hinge, the lower auxiliary hinge is fixedly connected to the sliding door body, and the lower auxiliary guide rail is in sliding engagement with the lower auxiliary hinge.

In an embodiment according to the first aspect of the present application, the lower auxiliary hinge is provided with at least one auxiliary guide wheel; the lower auxiliary guide rail is provided with a second guide groove, the second guide groove includes a second opening facing the second end, a third wall located on a side of the second opening facing away from the second end, and fourth walls arranged on two sides of the third wall along an extending direction of the second guide groove; and the auxiliary guide wheel is in contact with the fourth walls.

In any embodiment according to the first aspect of the present application, the lower auxiliary hinge is provided with two auxiliary guide wheels, axes of the two auxiliary guide wheels being coincident; the lower auxiliary hinge comprises a fixing portion, one end of the fixing portion being fixed to the sliding door body, and the other end of the fixing portion being fixed to the auxiliary guide wheels; and the two auxiliary guide wheels are fixed on a side of the fixing portion facing the first end.

In any embodiment according to the first aspect of the present application, the vehicle sliding door system further includes a door opening sealing strip disposed between the main sliding assembly and the auxiliary sliding assembly.

In any embodiment according to the first aspect of the present application, the middle sliding assembly includes a middle guide rail and a middle hinge, the middle hinge is fixedly connected to the sliding door body, and the middle guide rail is in sliding engagement with the middle hinge; the middle hinge includes a middle guide wheel and a middle load-bearing wheel, axes of the middle guide wheel and the middle load-bearing wheel intersect with each other, and the middle guide wheel is disposed on a side of the middle load-bearing wheel facing the first end and/or the second end; the middle guide rail is provided with a second load-bearing groove and at least one third guide groove; the third guide groove includes a third opening facing the second end or the first end, a fifth wall disposed opposite to the third opening, and sixth walls arranged on two sides of the fifth wall along an extending direction of the third guide groove; the middle guide wheel is in contact with the sixth walls, and an axis of the middle guide wheel is perpendicular to a plane where the fifth wall is located; the second load-bearing groove is provided with a third bottom wall located on a side of the middle load-bearing wheel close to the second end, the third bottom wall is connected to the sixth walls; the middle load-bearing wheel is in contact with the third bottom wall, and an axis of the middle load-bearing wheel is parallel to a plane where the third bottom wall is located.

In any embodiment according to the first aspect of the present application, when the third guide groove is located on a side of the second load-bearing groove close to the first end, the third bottom wall is connected to the sixth walls via a first connecting wall and a second connecting wall; the first connecting wall is directly connected to the sixth walls and parallel to the third bottom wall, and the second connecting wall is connected between the first connecting wall and the third bottom wall;
when the third guide groove is located on a side of the second load-bearing groove close to the second end, the third bottom wall is directly connected to the sixth walls.

In any embodiment according to the first aspect of the present application, two third guide grooves are provided, one of the third guide grooves is located on a side of the second load-bearing groove close to the first end, and the other one of the third guide grooves is located on a side of the second load-bearing groove close to the second end;
four middle guide wheels are arranged at four vertexes of an imaginary rectangle, two of the middle guide wheels are arranged along an extending direction of the third guide grooves and in sliding engagement with one of the third guide grooves, and the other two of the middle guide wheels are arranged along the extending direction of the third guide grooves and in sliding engagement with the other one of the third guide grooves;
one middle load-bearing wheel is arranged at a center of the imaginary rectangle, or two middle load-bearing wheels are respectively arranged at middle positions of sides of the imaginary rectangle that are parallel to axes of the middle guide wheels.

In any embodiment according to the first aspect of the present application, the lower main hinge includes a main guide wheel and a main load-bearing wheel, and axes of the main guide wheel and the main load-bearing wheel are perpendicular to each other; the lower main guide rail is provided with a first guide groove and a first load-bearing groove; the first guide groove includes a first opening facing the second end, a first wall located on a side of the first opening facing away from the second end, and second walls arranged on two sides of the first wall along an extending direction of the first guide groove; the main guide wheel is in contact with the second walls;
the first load-bearing groove is provided with a first bottom wall, the first bottom wall is located on a side of the main guide wheel facing away from the first end and in contact with the main guide wheel; two main guide wheels and a single first guide groove are provided, two main guide wheels are arranged along an extending direction of the first guide groove; a single main load-bearing wheel is provided, and disposed between the two main guide wheels along the extending direction of the first guide groove.

In any embodiment according to the first aspect of the present application, the vehicle sliding door system further includes an upper stop block, a lower stop block, an upper buffer block and a lower buffer block, the upper stop block and the upper buffer block being fixedly mounted at the first end, and the lower stop block and the lower buffer block being fixedly mounted at the second end; the upper stop block and the lower stop block are provided with a groove, the upper buffer block and the lower buffer block are provided with a protrusion, and the upper buffer block and the lower buffer block are made of flexible materials.

In a second aspect, an embodiment of the present application provides a vehicle, including any of the vehicle sliding door systems described in the first aspect.

The vehicle sliding door system of the present application can be installed with a frameless window to form a frameless sliding door. Specifically, the vehicle sliding door system has a first end and a second end. The first end is used for mounting the window. The vehicle sliding door system includes a middle sliding assembly mounted at the first end and a lower sliding assembly mounted at the second end, and the upper sliding assembly is removed to realize the frameless window. Moreover, the lower sliding assembly includes a main sliding assembly and an auxiliary sliding assembly that is located on a side of the main sliding assembly facing away from the first end. The main sliding assembly includes a lower main guide rail and a lower main hinge; the lower main hinge is fixedly connected to the sliding door body, and the lower main guide rail is in sliding engagement with the lower main hinge. The auxiliary sliding assembly includes a lower auxiliary guide rail and a lower auxiliary hinge; the lower auxiliary hinge is fixedly connected to the sliding door body, and the lower auxiliary guide rail is in sliding engagement with the lower auxiliary hinge. In the vehicle sliding door system, the lower sliding assembly adopts a dual-track parallel structure including the main sliding assembly and the auxiliary sliding assembly, and the auxiliary sliding assembly is located on a side of the main sliding assembly close to the second end. This allows to remove the upper sliding assembly to realize the frameless window while meeting the stability requirements of the vehicle sliding door system. In addition, the weight of the vehicle sliding door system is reduced, and the center of gravity of the vehicle sliding door system is lowered, which further enhances the stability of the vehicle sliding door system during opening and closing.

The above description is merely a general overview of the technical solutions of the present disclosure. In order to make the technical means of the present disclosure more clearly understood and can be implemented in accordance with the contents of the specification, and in order to make the above and other objects, features, and advantages of the present disclosure more apparent, specific implementations of the present disclosure are set forth below.

### BRIEF DESCRIPTION OF THE DRAWINGS

In order to describe technical solutions of the embodiments of the present disclosure or the related art more clearly, the accompanying drawings used in the illustration of the embodiments or the related art will be briefly introduced. Apparently, the accompanying drawings in the following explanation illustrate merely some embodiments of the present disclosure, and those skilled in the art may obtain other accompanying drawings based on these accompanying drawings without paying any creative effort.
FIG. 1 is a schematic structural diagram of a vehicle sliding door system according to an embodiment of the present application;
FIG. 2 is a partial cross-sectional view of a main sliding assembly in the vehicle sliding door system according to an embodiment of the present application;
FIG. 3 is a partial cross-sectional view of the main sliding assembly in the vehicle sliding door system according to an embodiment of the present application;
FIG. 4 is a partial structural schematic diagram of an auxiliary sliding assembly in the vehicle sliding door system according to an embodiment of the present application;
FIG. 5 is a schematic structural diagram of a lower sliding assembly in the vehicle sliding door system according to an embodiment of the present application;
FIG. 6 is a schematic structural diagram of a middle sliding assembly in the vehicle sliding door system according to an embodiment of the present application; and
FIG. 7 is a schematic structural diagram of a vehicle according to an embodiment of the present application.

### Reference numerals in the drawings:

1-Vehicle sliding door system; 10-Window; 11-Sliding door body; A1-First end; A2-Second end; 12-Middle sliding assembly; 121-Middle guide rail; 1211-Second load-bearing groove; 1212-Third guide groove; 1213-Third opening; 1214-Fifth wall; 1215-Sixth wall; 1216-Third bottom wall; 122-Middle hinge; 1221-Middle guide wheel; 1222-Middle load-bearing wheel; 13-Lower sliding assembly; 131-Main sliding assembly; 1311-Lower main guide rail; 1312-Lower main hinge; 1313-Main guide wheel; 1314-Main load-bearing wheel; 1315-First guide groove; 1316-First load-bearing groove; 1317-First opening; 1318-First wall; 1319-Second wall; 1320-First bottom wall; 132-Auxiliary sliding assembly; 1321-Lower auxiliary guide rail; 1322-Lower auxiliary hinge; 1323-Auxiliary guide wheel; 1324-Second guide groove; 1325-Second opening; 1326-Third wall; 1327-Fourth wall; 133-Door opening sealing strip; 14-Upper stop block; 15-Lower stop block; 16-Upper buffer block; 17-Lower buffer block; 18-Front lock; 19-Rear lock; 2-Vehicle

### DETAILED DESCRIPTION

To make the objectives, technical solutions, and advantages of embodiments of the present disclosure clear, a clear and thorough description for solutions in the embodiments of the present disclosure will be given below in conjunction with the accompanying drawings in the embodiments of the present disclosure. Apparently, the described embodiments are a part of embodiments of the present disclosure, not all the embodiments. All other embodiments obtained, based on the embodiments in the present disclosure, by those skilled in the art without paying creative effort fall within the protection scope of the present disclosure.

It should be noted that relational terms such as "first" and "second" are merely used to distinguish one entity or operation from another, and do not necessarily require or imply any actual relationship or order between such entities or operations. Furthermore, the terms "comprise", "include" or any other variants thereof are intended to cover a non-exclusive inclusion, such that a process, method, article or apparatus including a set of elements includes not only those elements, but also other elements not explicitly listed, or elements inherent to such process, method, article or apparatus. Without further limitations, an element defined by the phrase "comprising/including" does not exclude the presence of additional identical elements in the process, method, article or apparatus that includes the element.

Research shows that vehicles equipped with sliding doors are generally provided with upper, middle and lower hinges that are slidably connected to three guide rails on the vehicle body. The upper hinge is mounted on the upper part of the sliding door and needs to be connected to the door window frame of the sliding door, which makes it impossible for conventional sliding doors to adopt a frameless structure. In view of the above problems, the present application provides a vehicle sliding door system and a vehicle to realize frameless windows.

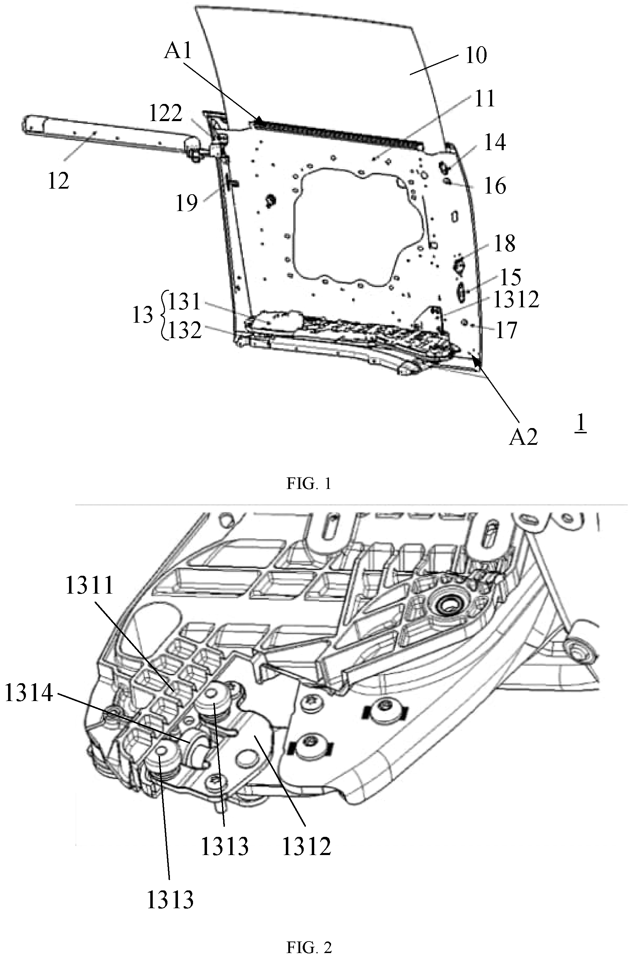

For a better understanding of the present application, the vehicle sliding door system and the vehicle according to the embodiments of the present application will be described in detail below with reference to FIG. 1 to FIG. 7.

Referring to FIG. 1 to FIG. 4, an embodiment of the present application provides a vehicle sliding door system 1, including a sliding door body 11, a middle sliding assembly 12 and a lower sliding assembly 13. The sliding door body 11 has a first end A1 for mounting a window 10 and a second end A2 remote from the first end A1. The middle sliding assembly 12 is mounted at the first end A1. The lower sliding assembly 13 is mounted at the second end A2. The lower sliding assembly 13 includes a main sliding assembly 131 and an auxiliary sliding assembly 132. The auxiliary sliding assembly 132 is disposed on the side of the main sliding assembly 131 facing away from the first end A1. The main sliding assembly 131 includes a lower main guide rail 1311 and a lower main hinge 1312. The lower main hinge 1312 is fixedly connected to the sliding door body 11 and slidably engaged with the lower main guide rail 1311. The auxiliary sliding assembly 132 includes a lower auxiliary guide rail 1321 and a lower auxiliary hinge 1322. The lower auxiliary hinge 1322 is fixedly connected to the sliding door body 11 and slidably engaged with the lower auxiliary guide rail 1321.

The vehicle sliding door system 1 of the present application can be installed with a frameless window 10 to form a frameless sliding door. Specifically, the vehicle sliding door system 1 has a first end A1 and a second end A2. The first end A1 is used for mounting the window 10. The vehicle sliding door system 1 includes a middle sliding assembly 12 mounted at the first end A1 and a lower sliding assembly 13 mounted at the second end A2, and the upper sliding assembly is removed to realize the frameless window 10. Moreover, the lower sliding assembly 13 includes a main sliding assembly 131 and an auxiliary sliding assembly 132 that is located on a side of the main sliding assembly 131 facing away from the first end A1. The main sliding assembly 131 includes a lower main guide rail 1311 and a lower main hinge 1312; the lower main hinge 1312 is fixedly connected to the sliding door body 11, and the lower main guide rail 1311 is in sliding engagement with the lower main hinge 1312. The auxiliary sliding assembly 132 includes a lower auxiliary guide rail 1321 and a lower auxiliary hinge 1322; the lower auxiliary hinge 1322 is fixedly connected to the sliding door body 11, and the lower auxiliary guide rail 1321 is in sliding engagement with the lower auxiliary hinge 1322. In the vehicle sliding door system 1, the lower sliding assembly 13 adopts a dual-track parallel structure including the main sliding assembly 131 and the auxiliary sliding assembly 132, and the auxiliary sliding assembly 132 is located on a side of the main sliding assembly 131 close to the second end A2. This allows to remove the upper sliding assembly to realize the frameless window 10 while meeting the stability requirements of the vehicle sliding door system 1. In addition, the weight of the vehicle sliding door system 1 is reduced, and the center of gravity of the vehicle sliding door system 1 is lowered, which further enhances the stability of the vehicle sliding door system 1 during opening and closing.

Specifically, the weight of the vehicle sliding door system 1 can be reduced by 15% due to the removal of the upper sliding assembly for the frameless window 10.

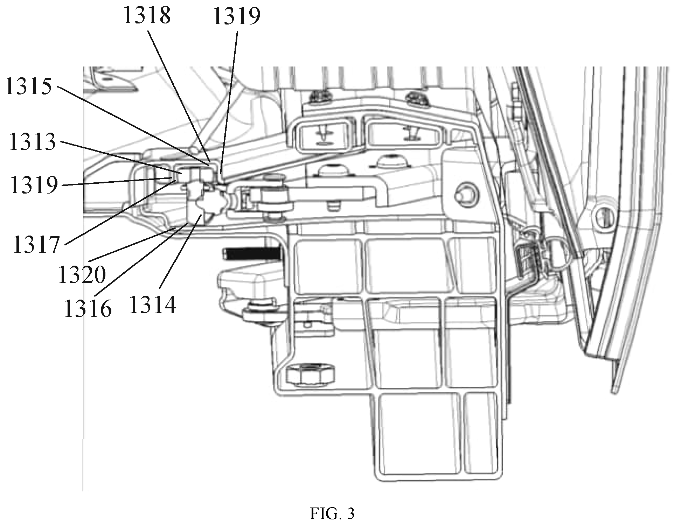

In a feasible implementation, as shown in FIG. 2 and FIG. 3, the lower main hinge 1312 includes a main guide wheel 1313 and a main load-bearing wheel 1314, and the axes of the main guide wheel 1313 and the main load-bearing wheel 1314 are perpendicular to each other. The lower main guide rail 1311 includes a first guide groove 1315 and a first load-bearing groove 1316. The first guide groove 1315 has a first opening 1317 facing the second end A2, a first wall 1318 located on the side of the first opening 1317 away from the second end A2, and second walls 1319 arranged on two sides of the first wall 1318 along the extending direction of the first guide groove 1315. The main guide wheel 1313 is in contact with the second walls 1319. The first load-bearing groove 1316 includes a first bottom wall 1320 that is located on the side of the main guide wheel 1313 away from the first end A1 and in contact with the main guide wheel 1313.

In the above implementation, the lower main guide rail 1311 is configured to include the first guide groove 1315 and the first load-bearing groove 1316, and the lower main hinge 1312 is configured to include the main guide wheel 1313 and the main load-bearing wheel 1314. The main guide wheel 1313 is in sliding engagement with the first guide groove 1315 to provide guidance during sliding of the main sliding assembly 131, so as to restrict the sliding door body 11 in its thickness direction (i.e., the inboard-to-outboard direction of the vehicle when the door is closed), thereby improving the stability of the sliding door body 11 during sliding. Through cooperation between the main load-bearing wheel 1314 and the first load-bearing groove 1316, a supporting force is provided for the sliding door body 11 in a direction perpendicular to the plane where the vehicle is placed, which can further enhance the stability of the sliding door body 11 during sliding and in a stationary state.

In a feasible implementation, as shown in FIG. 2 and FIG. 3, there are two main guide wheels 1313, one first guide groove 1315 and one main load-bearing wheel 1314. The two main guide wheels 1313 are arranged along the extending direction of the first guide groove 1315, and the main load-bearing wheel 1314 is disposed between the two main guide wheels 1313 along the extending direction of the first guide groove 1315.

In this implementation, the main load-bearing wheel 1314 rolls or slides along the extending direction of the first load-bearing groove 1316 to drive the sliding door body 11 to slide. By disposing the main load-bearing wheel 1314 between the two main guide wheels 1313 along the extending direction of the first guide groove 1315, the main load-bearing wheel 1314 can be limited on both sides along the extending direction of the first guide groove 1315, so as to prevent the main load-bearing wheel 1314 from disengaging from the first load-bearing groove 1316 and improve the stability and reliability of the vehicle sliding door system 1.

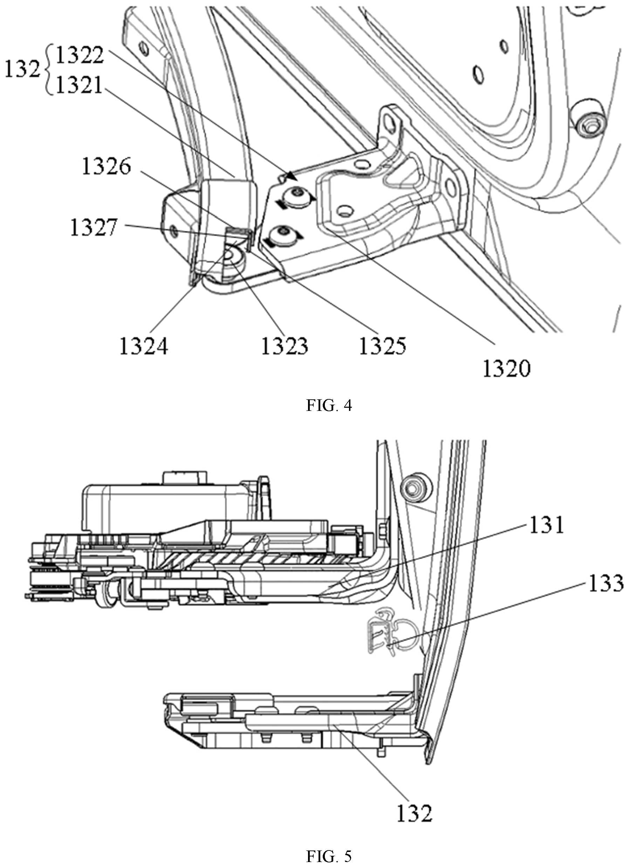

In a feasible implementation, as shown in FIG. 4, the lower auxiliary hinge 1322 includes at least one auxiliary guide wheel 1323. The lower auxiliary guide rail 1321 includes a second guide groove 1324. The second guide groove 1324 has a second opening 1325 facing the second end A2, a third wall 1326 located on the side of the second opening 1325 away from the second end A2, and fourth walls 1327 disposed on two sides of the third wall 1326 along the extending direction of the second guide groove 1324. The auxiliary guide wheel 1323 is in contact with the fourth walls 1327.

In this implementation, the auxiliary sliding assembly 132 plays an auxiliary limiting function during the sliding of the sliding door body 11. Specifically, during sliding and in a stationary state of the sliding door body 11, the second guide groove 1324 in the auxiliary sliding assembly 132 is in sliding engagement with the auxiliary guide wheel 1323, so as to limit the sliding door body 11 in its thickness direction (i.e., the inboard-to-outboard direction of the vehicle when the door is closed), thereby further improving the stability and reliability of the sliding door body 11.

When a single auxiliary guide wheel 1323 is adopted, space occupation can be reduced while the limiting function is achieved.

In another feasible implementation, the lower auxiliary hinge 1322 includes two auxiliary guide wheels 1323 whose axes coincide with each other. The lower auxiliary hinge 1322 further includes a fixing portion 1320. One end of the fixing portion 1320 is fixed to the sliding door body, and the other end of the fixing portion 1320 is connected to the auxiliary guide wheels 1323. The two auxiliary guide wheels 1323 are fixed on the side of the fixing portion facing the first end.

In this implementation, the axes of the two auxiliary guide wheels 1323 are coincident, thereby ensuring favorable engagement between both auxiliary guide wheels 1323 and the second guide groove 1324 during sliding movement while enhancing stability throughout the sliding process. The two auxiliary guide wheels 1323 are fixed to a side of the fixing portion 1320 facing the first end A1, making them compatible with the second guide groove 1324 having the second opening 1325 facing the second end A2 as described above. Both fourth walls 1327 of the second guide groove 1324 have a large area and are not provided with openings, thereby further improving the stability of engagement with the auxiliary guide wheels 1323.

In a feasible implementation, as shown in FIG. 5, the system further includes a door opening sealing strip 133 disposed between the main sliding assembly 131 and the auxiliary sliding assembly 132.

In this implementation, by arranging the auxiliary sliding assembly 132 on the side of the door opening sealing strip 133 close to the second end A2, occupation of the vehicle interior space by the auxiliary sliding assembly 132 can be prevented, thereby achieving a balance between the stability of the vehicle sliding door system 1 and the vehicle interior space.

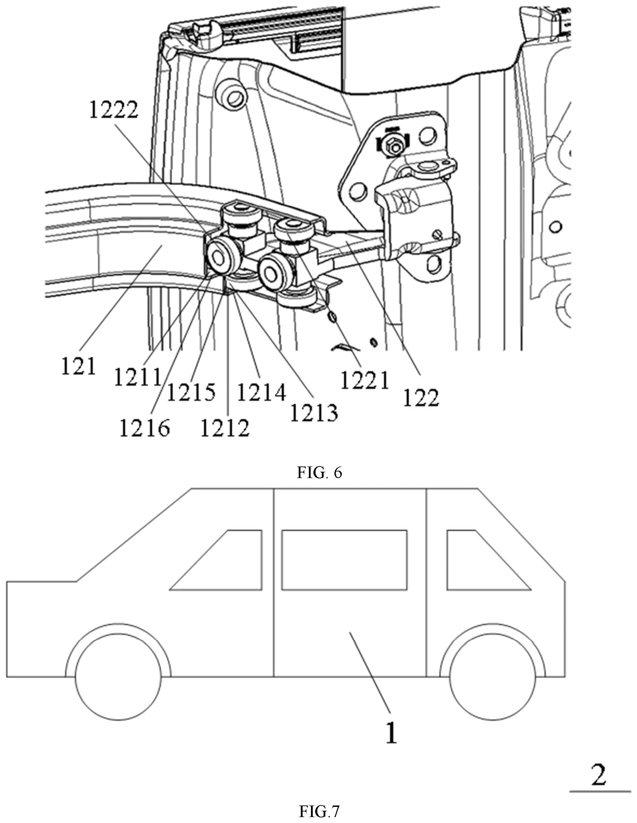

In a feasible implementation, as shown in FIG. 6, the middle sliding assembly 12 includes a middle guide rail 121 and a middle hinge 122. The middle hinge 122 is fixedly connected to the sliding door body 11, and the middle guide rail 121 is in sliding engagement with the middle hinge 122.

In this embodiment, the middle sliding assembly 12 includes the middle guide rail 121 and the middle hinge 122 that are slidably engaged with each other. This arrangement allows to limit the sliding door body 11 at the first end A1 thereof and improve the stability of the sliding door body 11 through a two-point matching structure together with the lower sliding assembly 13.

In a feasible implementation, as shown in FIG. 6, the middle hinge 122 includes a middle guide wheel 1221 and a middle load-bearing wheel 1222. The axes of the middle guide wheel 1221 and the middle load-bearing wheel 1222 intersect with each other. The middle guide wheel 1221 is disposed on the side of the middle load-bearing wheel 1222 facing the first end A1 and/or the second end A2. The middle guide rail 121 includes a second load-bearing groove 1211 and at least one third guide groove 1212. The third guide groove 1212 includes a third opening 1213 facing the second end A2 and/or the first end A1, a fifth wall 1214 disposed opposite to the third opening 1213, and sixth walls 1215 arranged on two sides of the fifth wall 1214 along the extending direction of the third guide groove 1212. The middle guide wheel 1221 is in contact with the sixth walls 1215, and the axis of the middle guide wheel 1221 is perpendicular to the plane where the fifth wall 1214 lies. The second load-bearing groove 1211 includes a third bottom wall 1216 located on the side of the middle load-bearing wheel 1222 close to the second end A2. The third bottom wall 1216 is connected to the sixth walls 1215. The middle load-bearing wheel 1222 is in contact with the third bottom wall 1216, and its axis is parallel to the plane where the third bottom wall 1216 lies.

In this embodiment, the middle sliding assembly 12 achieves the connection between the second load-bearing groove 1211 and the third guide groove 1212 by connecting the third bottom wall 1216 with the sixth walls 1215, thereby enhancing the integration level of the middle sliding assembly 12, reducing space occupancy of the sliding door body 11, and minimizing occupation of the vehicle interior space. The load-bearing wheel of the middle sliding assembly 12 and the second load-bearing groove engaged with the load-bearing wheel provide support force for the sliding door body 11 along the direction perpendicular to the plane where the vehicle is placed, thereby further improving the stability of the sliding door body 11 during the sliding process and in the stationary state. The mutually engaged middle guide wheel 1221 and third guide groove 1212 play a guiding function during the sliding movement, and limit the sliding door body 11 along its thickness direction (i.e., the inboard-to-outboard direction of the vehicle when the door is closed), thereby enhancing the stability of the sliding door body 11 during the sliding process.

In a feasible implementation, as shown in FIG. 6, when the third guide groove 1212 is arranged on the side of the second load-bearing groove 1211 close to the first end A1, the third bottom wall 1216 is connected to the sixth walls 1215 via a first connecting wall and a second connecting wall. The first connecting wall is directly connected to the sixth walls 1215 and parallel to the third bottom wall 1216, while the second connecting wall is arranged between the first connecting wall and the third bottom wall 1216, realizing an indirect connection between the third bottom wall 1216 and the sixth walls 1215.

When the third guide groove 1212 is arranged on the side of the second load-bearing groove 1211 close to the second end A2, the third bottom wall 1216 is directly connected to the sixth walls 1215.

In this embodiment, the third bottom wall 1216 and the sixth walls 1215 can be connected in either a direct manner or an indirect manner, which is not specifically limited herein. In a feasible implementation, two third guide grooves 1212 are provided, one of them being located on the side of the second load-bearing groove 1211 close to the first end A1, and the other being located on the side of the second load-bearing groove 1211 close to the second end A2.

In this embodiment, the number of the third guide groove 1212 can be one or two, which is not limited herein. When two third guide grooves 1212 are provided, one is arranged on the side of the second load-bearing groove 1211 close to the first end A1, and the other is arranged on the side of the second load-bearing groove 1211 close to the second end A2, so as to provide constraint on both sides of the middle load-bearing wheel 1222, i.e., the side close to and the side away from the second end A2, thereby achieving better limiting effect and thus improved stability of the sliding door body 11. Meanwhile, the middle load-bearing wheel 1222 can be positioned between the two third guide grooves 1212, preventing derailment of the middle load-bearing wheel 1222.

In a feasible implementation, as shown in FIG. 6, four middle guide wheels 1221 are arranged at four vertices of an imaginary rectangle. Two of the middle guide wheels 1221 are arranged along the extending direction of the third guide grooves 1212 and slidably engaged with one of the third guide grooves 1212, and the other two middle guide wheels 1221 are arranged along the extending direction of the third guide grooves 1212 and slidably engaged with the other one of the third guide grooves 1212.

In this embodiment, two middle guide wheels 1221 may be disposed in each third guide groove 1212, thereby providing two contact points for the middle hinge 122 in each third guide groove 1212. In this way, the stability between each third guide groove 1212 and the two middle guide wheels 1221 disposed therein is enhanced.

In a feasible implementation, as shown in FIG. 6, one middle load-bearing wheel 1222 is arranged at the center of the imaginary rectangle. The four middle guide wheels 1221 surround the middle load-bearing wheel 1222, and provide limiting on both sides of the middle load-bearing wheel 1222 along the extending direction of the second load-bearing groove 1211, as well as in the direction close to and the direction away from the second end A2. This further enhances the stability of the sliding door body 11.

In another feasible implementation, two middle load-bearing wheels 1222 are arranged at the middle positions of the sides of the imaginary rectangle which are parallel to the axes of the middle guide wheels 1221.

In this embodiment, two middle load-bearing wheels 1222 are provided to form two contact points between the middle hinge 122 and the second load-bearing groove 1211, thereby further improving the stability of the sliding door body 11.

In a feasible implementation, as shown in FIG. 1, the system further includes an upper stop block 14, a lower stop block 15, an upper buffer block 16 and a lower buffer block 17. The upper stop block 14 and the upper buffer block 16 are fixedly disposed at the first end A1, while the lower stop block 15 and the lower buffer block 17 are fixedly disposed at the second end A2. Each of the upper stop block 14 and the lower stop block 15 is provided with a groove. Each of the upper buffer block 16 and the lower buffer block 17 is provided with a protrusion. The upper buffer block 16 and the lower buffer block 17 are made of flexible materials.

In this embodiment, at the waist position of the sliding door body 11, i.e., at the first end A1, the upper stop block 14 can limit the sliding door body 11 along its thickness direction (i.e., the inboard-to-outboard direction of the vehicle when the door is closed) and/or along the sliding direction of the sliding door assembly, thereby enhancing the stability of the sliding door assembly. At the lower portion of the sliding door body 11, i.e., at the second end A2, the lower stop block can limit the sliding door body 11 along its thickness direction (i.e., the inboard-to-outboard direction of the vehicle when the door is closed) and/or along the sliding direction of the sliding door assembly, thereby enhancing the stability of the sliding door assembly. Specifically, the upper stop block 14 and the lower stop block 15 are each provided with a groove, which can cooperate respectively with the upper stop protrusion and the lower stop protrusion arranged on the vehicle body to realize the limiting function.

In this embodiment, at the waist position of the sliding door body 11, i.e., at the first end A1, the upper buffer block 16 can provide support and buffering for the sliding door body 11 along its thickness direction (i.e., the inboard-to-outboard direction of the vehicle when the door is closed) and/or along the sliding direction of the sliding door assembly, thereby enhancing the stability of the sliding door assembly. At the lower portion of the sliding door body 11, i.e., at the second end A2, the lower buffer block 17 can provide support and buffering for the sliding door body 11 along its thickness direction (i.e., the inboard-to-outboard direction of the vehicle when the door is closed) and/or along the sliding direction of the sliding door assembly, thereby enhancing the stability of the sliding door assembly. Specifically, the upper buffer block 16 and the lower buffer block 17 each include a protrusion, which directly contacts the vehicle body to achieve the buffering function.

In this embodiment, the upper buffer block 16 and the lower buffer block 17 may be made of rubber, which features good support, flexibility and low cost. The materials of the upper buffer block 16 and the lower buffer block 17 are not specifically limited herein.

In a feasible implementation, the system further includes a front lock 18 and a rear lock 19 fixed on the sliding door body 11. The front lock 18 and the rear lock 19 are respectively disposed on two sides of the sliding door body 11 along the front-to-rear direction of the vehicle to lock the sliding door body 11.

The present application further provides a vehicle. As shown in FIG. 7, the vehicle is equipped with any of the vehicle sliding door systems 1 described above.

In the vehicle sliding door system 1, the middle guide rail 121, the lower auxiliary guide rail 1321 and the lower main guide rail 1311 are all fixedly mounted on the vehicle body, allowing the sliding door body 11 to be slidably assembled to the vehicle body.

The vehicle provided by the present application can be a pure electric vehicle, a hybrid electric vehicle, an extended-range electric vehicle or the like, which is not specifically limited.

The above embodiments do not elaborate all details, nor limit the present application to the described implementations. Apparently, numerous modifications and variations can be made in accordance with the above description. These embodiments are selected and described to better explain the principles and practical applications of the present application, so that those skilled in the art can fully utilize the present application and make modifications based thereon. The protection scope of the present application shall be subject to the claims and all equivalents thereof.

Various specific details are set forth in the present specification. Nevertheless, it should be understood that the embodiments of the present application may be practiced without these specific details. In some instances, well-known methods, structures and techniques have not been described in detail so as not to obscure the understanding of the present specification.

Finally, it should be noted that the above embodiments are merely intended to illustrate the technical solutions of the present application, rather than to limit them. Although the present application has been described in detail with reference to the foregoing embodiments, those skilled in the art should understand that they can still make modifications to the technical solutions recorded in the embodiments, or make equivalent replacements to part of the technical features. Such modifications or replacements shall not depart from the spirit and scope of the technical solutions of the present application.

## Claims

1. A vehicle sliding door system, comprising:
a sliding door body, wherein the sliding door body comprises a first end for mounting a window and a second end remote from the first end;
a middle sliding assembly mounted at the first end; and
a lower sliding assembly, mounted at the second end and comprising a main sliding assembly and an auxiliary sliding assembly, wherein the auxiliary sliding assembly is disposed on a side of the main sliding assembly facing away from the first end; the main sliding assembly comprises a lower main guide rail and a lower main hinge, the lower main hinge is fixedly connected to the sliding door body, and the lower main guide rail is in sliding engagement with the lower main hinge; the auxiliary sliding assembly comprises a lower auxiliary guide rail and a lower auxiliary hinge, the lower auxiliary hinge is fixedly connected to the sliding door body, and the lower auxiliary guide rail is in sliding engagement with the lower auxiliary hinge.

2. The vehicle sliding door system according to claim 1, wherein the lower auxiliary hinge is provided with at least one auxiliary guide wheel; the lower auxiliary guide rail is provided with a second guide groove, the second guide groove comprises a second opening facing the second end, a third wall located on a side of the second opening facing away from the second end, and fourth walls arranged on two sides of the third wall along an extending direction of the second guide groove; and the auxiliary guide wheel is in contact with the fourth walls.

3. The vehicle sliding door system according to claim 2, wherein the lower auxiliary hinge is provided with two auxiliary guide wheels, axes of the two auxiliary guide wheels being coincident; the lower auxiliary hinge comprises a fixing portion, one end of the fixing portion being fixed to the sliding door body, and the other end of the fixing portion being fixed to the auxiliary guide wheels; and the two auxiliary guide wheels are fixed on a side of the fixing portion facing the first end.

4. The vehicle sliding door system according to claim 1, further comprising a door opening sealing strip disposed between the main sliding assembly and the auxiliary sliding assembly.

5. The vehicle sliding door system according to claim 1, wherein the middle sliding assembly comprises a middle guide rail and a middle hinge, the middle hinge is fixedly connected to the sliding door body, and the middle guide rail is in sliding engagement with the middle hinge; the middle hinge comprises a middle guide wheel and a middle load-bearing wheel, axes of the middle guide wheel and the middle load-bearing wheel intersect with each other, and the middle guide wheel is disposed on a side of the middle load-bearing wheel facing the first end and/or the second end; the middle guide rail is provided with a second load-bearing groove and at least one third guide groove; the third guide groove comprises a third opening facing the second end or the first end, a fifth wall disposed opposite to the third opening, and sixth walls arranged on two sides of the fifth wall along an extending direction of the third guide groove; the middle guide wheel is in contact with the sixth walls, and an axis of the middle guide wheel is perpendicular to a plane where the fifth wall is located; the second load-bearing groove is provided with a third bottom wall located on a side of the middle load-bearing wheel close to the second end, the third bottom wall is connected to the sixth walls; the middle load-bearing wheel is in contact with the third bottom wall, and an axis of the middle load-bearing wheel is parallel to a plane where the third bottom wall is located.

6. The vehicle sliding door system according to claim 5, wherein when the third guide groove is located on a side of the second load-bearing groove close to the first end, the third bottom wall is connected to the sixth walls via a first connecting wall and a second connecting wall; the first connecting wall is directly connected to the sixth walls and parallel to the third bottom wall, and the second connecting wall is connected between the first connecting wall and the third bottom wall;
when the third guide groove is located on a side of the second load-bearing groove close to the second end, the third bottom wall is directly connected to the sixth walls.

7. The vehicle sliding door system according to claim 5, wherein two third guide grooves are provided, one of the third guide grooves is located on a side of the second load-bearing groove close to the first end, and the other one of the third guide grooves is located on a side of the second load-bearing groove close to the second end;
four middle guide wheels are arranged at four vertexes of an imaginary rectangle, two of the middle guide wheels are arranged along an extending direction of the third guide grooves and in sliding engagement with one of the third guide grooves, and the other two of the middle guide wheels are arranged along the extending direction of the third guide grooves and in sliding engagement with the other one of the third guide grooves;
one middle load-bearing wheel is arranged at a center of the imaginary rectangle, or two middle load-bearing wheels are respectively arranged at middle positions of sides of the imaginary rectangle that are parallel to axes of the middle guide wheels.

8. The vehicle sliding door system according to claim 1, wherein the lower main hinge comprises a main guide wheel and a main load-bearing wheel, and axes of the main guide wheel and the main load-bearing wheel are perpendicular to each other; the lower main guide rail is provided with a first guide groove and a first load-bearing groove; the first guide groove comprises a first opening facing the second end, a first wall located on a side of the first opening facing away from the second end, and second walls arranged on two sides of the first wall along an extending direction of the first guide groove; the main guide wheel is in contact with the second walls;
the first load-bearing groove is provided with a first bottom wall, the first bottom wall is located on a side of the main guide wheel facing away from the first end and in contact with the main guide wheel; two main guide wheels and a single first guide groove are provided, two main guide wheels are arranged along an extending direction of the first guide groove; a single main load-bearing wheel is provided, and disposed between the two main guide wheels along the extending direction of the first guide groove.

9. The vehicle sliding door system according to claim 1, further comprising an upper stop block, a lower stop block, an upper buffer block and a lower buffer block, the upper stop block and the upper buffer block being fixedly mounted at the first end, and the lower stop block and the lower buffer block being fixedly mounted at the second end; the upper stop block and the lower stop block are provided with a groove, the upper buffer block and the lower buffer block are provided with a protrusion, and the upper buffer block and the lower buffer block are made of flexible materials.

10. A vehicle, comprising the vehicle sliding door system according to any one of claims 1 to 9.
